(19) Europäisches Patentamt

European Patent Office

Office européen des brevets

(11) Veröffentlichungsnummer: **0 411 322 A1**

(12) **EUROPÄISCHE PATENTANMELDUNG**

(21) Anmeldenummer: 90112444.6

(22) Anmeldetag: 29.06.90

(51) Int. Cl.5: **B23K 35/28**, B23K 35/02, B23K 26/00

(30) Priorität: 07.07.89 DE 3922378

(43) Veröffentlichungstag der Anmeldung:
06.02.91 Patentblatt 91/06

(84) Benannte Vertragsstaaten:
DE ES FR GB IT

(71) Anmelder: AUDI AG
Auto-Union-Strasse 1 Postfach 220
D-8070 Ingolstadt(DE)

(72) Erfinder: Lindner, Horst
Silesiusstrasse 1
D-8070 Ingolstadt(DE)
Erfinder: Bergmann, Hans-Wilhelm, Prof. Dr.
Irisstrasse 9
D-8501 Eckenthal-Brand(DE)

(74) Vertreter: Le Vrang, Klaus
AUDI AG Postfach 220 Patentabteilung I/EQP
D-8070 Ingolstadt(DE)

(54) Verfahren zum Herstellen verschleissfester Oberflächen an Bauteilen aus einer Aluminium-Silicium-Legierung.

(57) Die Erfindung betrifft ein Verfahren zum Herstellen verschleißfester Oberflächen an Bauteilen aus einer Al-Si-Legierung, bei dem die Oberflächen mit einer Schicht aus einem Binder, aus pulverförmigen Silicium, einem Impfmittel für primäre Siliciumkristalle und einem Flußmittel beschichtet wird und anschließend diese Beschichtung mittels Laserenergie eingeschmolzen wird. Eine einfache Auftragsmethode der Legierungselemente wird durch Siebdrucktechnik erzielt.

## VERFAHREN ZUM BERSTELLEN VERSCHLEISSFESTER OBERFLÄCHEN AN BAUTEILEN AUS EINER ALUMINIUM-SILICIUM-LEGIERUNG

Die Erfindung betrifft ein Verfahren zum Herstellen verschleißfester Oberflächen an Bauteilen aus einer Al-Si-Legierung, insbesondere an Zylinderlaufflächen von Bubkolben-Brennkraftmaschinen.

Bei Bauteilen aus Al-Si-Legierungen, insbesondere bei Zylinderblöcken von Bubkolben-Brennkraftmaschinen, werden bevorzugt übereutektische Aluminium-Legierungen eingesetzt, da sich diese im Hinblick auf geringen Verschleiß, Reibungsminimierung, gutes Einlaufverhalten etc. als besonders geeignet erwiesen haben. Es ist bekannt, daß diese Eigenschaften erreicht werden, wenn die Zylinderlauffläche zunächst mechanisch vorbearbeitet wird, anschließend durch einen Honvorgang auf eine Rauhigkeit von deutlich unter 1 μ geglättet wird und schließlich durch einen geeigneten Ätzprozeß das Aluminium zurückgesetzt wird, um die groben primären Siliciumkristalle als tragende verschleißfeste Struktur herauszubilden. Das zurückgesetzte Aluminium ermöglicht den Aufbau eines beständigen Schmierfilmes.

Typischerweise enthalten die heute eingesetzten Aluminiumlegierungen 14-17 % Silicium, um eine ausreichende Zahl und Größe der primären Siliciumkristalle zu gewährleisten. Nachteilig ist dabei, daß diese Legierungen nur in kostspieligem Sandguß oder Niederdruckgußverfahren und nicht mit dem preisgünstigeren, automatisierbaren Rochdruckgußprozeß hergestellt werden können. Darüber hinaus bewirken die groben Siliciumkristalle einen hohen Verschleiß an Bearbeitungswerkzeugen wegen ihrer hohen Härte von 1000-1100 HV.

Durch die EP-A 221 276 ist es ferner bekannt, Al-Legierungen durch Umschmelzen ihrer Randschichten mit Laserenergie verschleißbeständiger auszubilden. Dabei wird auf die Oberfläche eine Schicht aus einem Binder, pulverförmigen Silicium, Kupfer und Titancarbid aufgebracht und anschließend mit dem Laser in die Oberfläche eingeschmolzen. Die Zugaben an TIC betragen in den Ausführungsbeispielen zwischen 5 % - 30 % und bewirken eine beträchtliche Zunahme in der Oberflächenhärte. Unter tribologischen Aspekten ist jedoch zu sehen, daß aufgrund der extrem hohen Abkühlgeschwindigkeiten beim Laserumschmelzen zwar eine hohe Kornfeinheit, aber keine ausreichende Ausbildung des Primärsiliciums auftritt. Dies ist aber beispielsweise bei Zylinderlaufflächen von Hubkolbenmaschinen aus Al-Si-Legierungen zur Erzielung tribologisch günstiger Lauf flächen (mit tragenden Plateaus aus Primärsilicium und zurückgesetzten, Schmierstoffe haltenden Bereichen) unbedingt anzustreben.

Aufgabe der Erfindung ist es, ein gattungsgemäßes Verfahren zu entwickeln, mit dem in herstellungstechnisch günstiger und wirtschaftlicher Weise Bauteile mit verschleißfesten, tribologisch günstigen Oberflächen, insbesondere Zylinderblöcke mit verschleißfesten Zylinderlaufflächen, geschaffen werden.

Diese Aufgabe wird erfindungsgemäß mit den kennzeichnenden Merkmalen des Patentanspruches 1 gelöst. Vorteilhafte und zweckmäßige Weiterbildungen des Verfahrens sind den Merkmalen der weiteren Patentansprüche entnehmbar.

Durch die erfindungsgemäßen Maßnahmen des Einlegierens von Silicium in die Funktionsflächen des Bauteiles, insbesondere beim Zylindergehäuse in die Zylinderlaufflächen, wird der große Vorteil erzielt, daß bei zumindest gleich verschleißfesten Oberflächen eine untereutektische oder eutektische Al-Si-Legierung als Ausgangswerkstoff verwendbar ist, die sowohl gut vergießbar als auch spanend bearbeitbar ist.

Das pulverförmige Silicium wird mit einem Binder und einem Impfmittel bzw. Keimbildner in einer definierten Schicht auf die Oberfläche aufgetragen und dann mittels des Lasers in diese Oberfläche eingeschmolzen. Dabei ist die Menge des eingeschmolzenen Siliciums und die Einschmelztiefe so abzustimmen, daß eine übereutektische Zusammensetzung in der Oberfläche eingestellt wird. Um einen hohen Wirkungsgrad beim Einbringen der Legierungselemente zu erzielen und den negativen Einfluß von Oxydhäuten an der Oberfläche zu vermeiden, wird der Beschichtung ferner erfindungsgemäß ein Flußmittel, wie es beim Schweißen von Aluminium verwendet wird, zugegeben.

Durch den hochmelzenden heterogenen Keimbildner kann nunmehr sofort die Erstarrung des primären Siliciums beginnen, es wird also keine wesentliche Unterkühlung zustandekommen und damit auch keine starke Übersättigung. Dies führt zur Bildung grober, homogen verteilter Siliciumkristalle in der Schmelzschicht.

Als Impfmittel wird gemäß den Merkmalen der Ansprüche 2 bis 4 bevorzugt Aluminiumoxyd einer definierten Partikelgröße oder aber eine der Substanzen Siliciumnitrid, Siliciumkarbid, Titankarbid, Titannitrid, Borkarbid oder Titanborid vorgeschlagen. Die Partikelgröße beim Aluminiumoxyd ist so zu wählen, daß es während der Bearbeitung mit dem Laser durch das Flußmittel nicht vollständig reduziert wird.

Durch die Beimengung von Nickel gemäß Patentanspruch 12 gelingt es ferner, die Härte noch deutlich zu steigern, bei gleichzeitig homogenem Gefüge in der eingeschmolzenen Zone. Beste Ergebnisse wurden erreicht bei Härtewerten um 300 HV. Diese Warmfestigkeit ist insbesondere bei Zylinderblöcken für Brennkraftmaschinen von Vorteil; selbst nach einer halbstündigen Glühung bei 550° K konnten Werte von über 150 HV gehalten werden. Dies ist auch nach der Glühung, die für Al schon sehr hoch liegt, immer noch deutlich mehr wie die Härte der heute eingesetzten übereutektischen Al-Si-Legierungen mit 17 % Silicium. Zwar werden beispielsweise an Zylinderlaufflächen keine so hohen Temperaturen erreicht, aufgrund der Entfestigungsmechanismen kann jedoch davon ausgegangen werden, daß man bei entsprechend niedriger Temperatur entsprechend lange eine hohe Härte halten kann.

Entsprechend den chemischen und/oder mechanischen Anforderungen an das herzustellende Bauteil können zudem vorteilhaft ein oder mehrere der im Patentanspruch 6 angeführten Übergangselemente mit eingeschmolzen werden, die hinsichtlich der Festigkeit, der Zähigkeit und der Korrosionsbeständigkeit qualitätsverbessernd wirken.

Für das Lasereinschmelzlegieren in großtechnischem Maße ist ein Verfahren erforderlich, mit dem man die Legierungselemente schnell reproduzierbar in Dicke, Zusammensetzung und geometrischer Anordnung mit möglichst geringen Verlusten an geraden, aber auch an gekrümmten und zum Teil schwer zugänglichen Flächen aufbringen kann. Die heute in der Technik für ähnliche Anwendungsfälle übliche Methode des thermischen Spritzens, Plasmaspritzens oder Explosivbeschichtens haben hier deutliche Nachteile. Darüber hinaus sind sie teuer und verursachen einen hohen Anteil an Overspray (Pulververlusten), der darüber hinaus beim bevorzugten Anwendungsgebiet an Zylindergehäusen für Brennkraftmaschinen den Nachteil besitzt, daß er aus dem behandelten Motorbereich entfernt werden muß.

Gemische aus Bindern und Pulvern, die man auf die Oberfläche aufstreicht, sind zwar anwendbar, führen in der Regel jedoch nicht zu reproduzierbaren Beschichtungen.

Besonders bevorzugt wird deshalb gemäß den Merkmalen der Patentansprüche 7 bis 10 vorgeschlagen, die Beschichtung in Siebdrucktechnik als Abziehfolie herzustellen und auf das Bauteil aufzubringen. Dabei ist es möglich, beliebige Pulvergemische bis zu einer Schichtdicke von 60-90 um direkt zu verdrucken. Sind höhere Schichtdicken bis zu 600 μm gewünscht, so wird zunächst nur der Binder als Folie verdruckt und anschließend das gewünschte Pulvergemisch mit einem Dosierer flächig auf die Folie gestreut. Auf diese Weise gelingt es, auch dickere Schichten gleichmäßig und reproduzierbar herzustellen.

Wird eine mit einer wasserlöslichen Substanz beschichtete Druckunterlage (z. B. Papier oder Trägerfolie) verwendet, so ist es möglich, die mit wasserunlöslichen oder schwer in Wasser löslichen Bindern verdruckten Beschichtungen wie Abziehbilder vom Druckpapier zu lösen und in beliebiger, z. B. vorgestanzter Form, auf die gewünschten Flächen in der Zylinderlaufbahn aufzubringen.

Desweiteren ist es möglich, die Druckunterlage mit einer in unpolaren Lösungsmitteln löslichen Substanz zu beschichten und zum Verdrucken der Pulver einen wasserlöslichen Binder zu benutzen. In diesem Fall erfolgt das Übertragen der Abziehbilder mit unpolaren Lösungsmitteln.

Mit der vorgeschlagenen Beschichtung können auch Krümmungsradien beschichtet werden, die minimal doppelt so groß wie die Schichtdicke sind. Durch Wahl eines Binders mit hohem Verdampfungspunkt erlangt man den Vorteil, daß die Beschichtungspulver so lange an der künftigen Wirkstelle gehalten werden, bis sie vom Laser angeschmolzen werden und aufgrund der Benetzung der Oberfläche dann nicht mehr wegspritzen.

Gemäß den Merkmalen der Patentansprüche 11 und 12 soll insbesondere für Laufflächen von Zylinderblöcken für Brennkraftmaschinen der Silicium-Anteil in der einlegierten Schicht 20-28 % und ggf. der Nickel-Anteil 5-10 % betragen.

Das Einschmelzlegieren kann bevorzugt gemäß Patentanspruch 13 mit einem linienförmig focusierten Laserstrahl entweder flächenhaft oder in einem definierten Raster erfolgen. Erfolgt das Einschmelzlegieren in einer inerten Atmosphäre, so ist das Schmelzbad vorteilhaft gegen Oxidation geschützt. Wird bei einer Stickstoff-Atmosphäre umgeschmolzen, so kann durch die Bildung von Nitriten die Härte in der umgeschmolzenen Schicht gesteigert werden. Gleiches gilt für den Einsatz bei einem Kohlenstoff lieferndem Gas, vorzugsweise Methan, welches die Bildung von Karbiden in der umgeschmolzenen Schicht ermöglicht.

Das Einschmelzlegieren wird zweckmäßigerweise mit einer Einstellung des verwendeten Lasers durchgeführt, wie sie dem Patentanspruch 14 entnehmbar ist. Um der durch das Umschmelzen auftretenden Erwärmung des Bau teiles bzw. Zylinderblockes entgegenzuwirken, kann das Bauteil ggf. gekühlt werden. Dies stellt sicher, daß auch bei größeren, zu bearbeitenden Oberflächen eine einheitliche Oberflächenstruktur mit gleichmäßiger Einschmelztiefe und -härte erreicht wird.

Ein Ausführungsbeispiel der Erfindung ist im folgenden näher beschrieben.

Es wurden die Laufflächen des Zylinderblockes für eine Hubkolben-Brennkraftmaschine mit einem CO2-Laser umschmelzlegiert. Der Zylinderblock bestand aus einer Al-Si-Legierung mit einem Silicium-Gehalt von 12 %. In dieser Legierung ist der Zylinderblock herstellungsgünstig gießbar und zerspanbar.

Auf die mechanisch vorbearbeiteten (feingebohrten) Laufflächen wurde eine Schicht in Form einer Abziehfolie aufgebracht.

Dazu wurde ein nicht wasserlöslicher Binder verwendet und das Druckmedium (Pulver) auf ein Spezialpapier aufgebracht. Das Papier war mit einem wasserlöslichen Lack beschichtet. Nach dem Trocknen des Pulver-Binder-Gemisches ist die Folie mit dem Papier als Träger sehr gut handhab- und lagerbar. Das Übertragen auf die Laufflächen erfolgt dann, indem man das Papier einige Minuten in Wasser legt. Der Lack der Zwischenschicht löst sich und die weiterhin stabile Pulver-Binder-Abziehfolie kann auf die Laufflächen geschoben werden. Nach kurzer Trockenzeit haftet die Abziehfolie mechanisch fest auf den Laufflächen.

Die Herstellung der eigentlichen Schicht bzw. Abziehfolie erfolgte in Siebdrucktechnik. Dabei wurde das in Pastenform angemachte Pulver-Binder-Gemisch mittels eines Rakels durch ein Sieb gedrückt, welches parallel in einem definierten Abstand zu einer Unterlage (Spezialpapier) angeordnet ist. Der Feststoffgehalt der Schicht ist dabei im wesentlichen durch die Maschenweite des verwendeten Drucksiebes und die Korngröße der Pulver bestimmt.

Das eingemengte Pulver setzte sich zusammen aus Silicium, Nickel, einem Flußmittel (wie beispielsweise zum Aluminiumschweißen verwendet) und Aluminiumoxyd als Impfmittel mit einer Partikelgröße von 1-5 $\mu$m. Die Schichtdicke betrug etwa 90 $\mu$m.

Anstelle der Abziehfolie kann - sofern größere Schichtdicken verarbeitet werden sollen - auch nur der Binder in Siebdrucktechnik aufgebracht werden und das Pulvergemisch auf den noch nassen Binder mittels eines Dosierers aufgestreut werden.

Nach dem Aufbringen der Schicht auf die Laufflächen wurde mittels dem $CO_2$-Laser mit einer linienförmigen Focusierung des Laserstrahls und in einer stickstoffhaltigen Atmosphäre des Schmelzbades (Argongas) das Umschmelzlegieren durchgeführt, wobei durch die eingestellte Laserenergie und die Vorschubgeschwindigkeit eine Einschmelztiefe von 400 $\mu$m verwirklicht wurde.

Die Leistungsflußdichte des Laserstrahls betrug 2 * $10^6$/cm$^2$ und die Vorschubgeschwindigkeit 1 m/min. Die Laufflächen wurden in einer spiralförmigen Schmelzbahn aufgeschmolzen, wobei der Zylinderblock zur Erzielung einer gleichmäßigen Abschreckgeschwindigkeit und Einschmelztiefe gekühlt wurde.

Nach dem Umschmelzlegieren durch den Eintrag der Schicht in das Schmelzbad stellte sich in der umgeschmolzenen Zone eine erheblich feinere Gefügeausbildung mit einem erhöhten Anteil an primären Aluminium ein. Durch den Zusatz des keimbildend wirkenden Aluminiumoxyds wurde die Ausbildung von polygonalem Primärsilicium begünstigt, welches in die Aluminiummatrix eingebettet ist. Dieses Gefüge ist speziell im Hinblick auf Verschleißfestigkeit bei Gleitbeanspruchung besonders vorteilhaft.

Der Si-Anteil in der legierten Zone betrug 25 %, der Ni-Anteil 8 % und die Härte über 250 HV 0,1.

Ggf. können die umgeschmolzenen Laufflächen im Bereich des oberen Umkehrpunktes der Kolbenringe (am stärksten verschleißbeansprucht!) härter ausgebildet sein als die darunterliegenden. Beispielsweise können nur diese Bereiche zusätzlich mit Ni legiert sein.

Nach dem Umschmelzlegieren in der beschriebenen Form wurden die Zylinderlaufflächen des Zylinderblocks abschließend mechanisch gehont.

## Ansprüche

1. Verfahren zum Herstellen verschleißfester Oberflächen an Bauteilen aus einer Al-Si-Legierung, insbesondere an Zylinderlaufflächen von Hubkolben-Brennkraftmaschinen, wobei die Oberflächen mit einer Schicht mit einem Binder und pulverförmigen Silicium beschichtet und anschließend diese Beschichtung mittels Laserenergie eingeschmolzen wird, **dadurch gekennzeichnet,** daß der Schicht ferner ein Impfmittel (Keimbildner) für primäre Siliciumkristalle beigegeben wird.

2. Verfahren nach Anspruch 1, **dadurch gekennzeichnet,** daß als Impfmittel Aluminiumoxyd verwendet wird.

3. Verfahren nach Anspruch 2, **dadurch gekennzeichnet,** daß die Partikelgröße des Aluminiumoxyds 1-5 $\mu$m beträgt.

4. Verfahren nach Anspruch 1, **dadurch gekennzeichnet,** daß als Impfmittel bzw. Keimbildner eine der folgenden Substanzen zur Anwendung kommt: Siliciumnitrid, Siliciumkarbid, Titankarbid, Titannitrid, Borkarbid, Titanborid.

5. Verfahren nach einem der Ansprüche 1 - 4, **dadurch gekennzeichnet,** daß der Schicht ein Flußmittel beigegeben wird.

6. Verfahren nach einem oder mehreren der vorhergehenden Ansprüche, **dadurch gekennzeichnet,** daß der Schicht ein oder mehrere der folgenden Übergangselemente beigemengt werden: Cr, Mn, Cu, Fe, Mo, Va, Ti, Zr.

7. Verfahren nach einem oder mehreren der vorhergehenden Ansprüche, **dadurch gekennzeichnet,** daß die Beschichtung in Siebdrucktechnik als Abziehfolie hergestellt und an der Oberfläche aufgebracht wird.

8. Verfahren nach Anspruch 7, **dadurch gekennzeichnet,** daß die Beschichtung auf einem beweglichen und flexiblen Träger, vorzugsweise eine Gummimembran, aufgebracht und noch im feuchten Zustand auf die Oberfläche übertragen wird.

9. Verfahren nach Anspruch 7, **dadurch gekennzeichnet,** daß zuerst ein Binder vorgedruckt wird und anschließend das Pulver mittels eines Dosierers aufgebracht wird.

10. Verfahren nach den vorhergehenden Ansprüchen, **dadurch gekennzeichnet,** daß die Dicke der Schicht 40-400 μm, vorzugsweise 200 μm und die Einschmelztiefe 200-800 μm, vorzugsweise 400-600 μm beträgt.

11. Verfahren nach einem oder mehreren der vorhergehenden Ansprüche, **dadurch gekennzeichnet,** daß der Si-Anteil in der einlegierten Schicht 17-40 %, vorzugsweise 20-28 % beträgt.

12. Verfahren nach einem oder mehreren der vorhergehenden Ansprüche, **dadurch gekennzeichnet,** daß der Schicht ferner Nickel beigemengt wird, wobei der Ni-Anteil in der einlegierten Schicht 3-18 %, vorzugsweise 5-10 % beträgt.

13. Verfahren nach einem oder mehreren der vorhergehenden Ansprüche, dadurch gekennzeichnet, daß mit einem linienförmig focusierten Laserstrahl in inerter Atmosphäre umgeschmolzen wird.

14. Verfahren nach einem oder mehreren der vorhergehenden Ansprüche, **dadurch gekennzeichnet,** daß bei einer Leistungsflußdichte des Laserstrahls zwischen $5 * 10^5$ bis $5 * 10^6$ W/cm$^2$ gearbeitet wird und daß die Vorschubgeschwindigkeit zwischen 0,3 und 4 m/min, vorzugsweise 0,8-1,3 m/min gewählt wird.

15. Verfahren nach einem oder mehreren der vorhergehenden Ansprüche, **dadurch gekennzeichnet,** daß ein organischer Binder mit hoher Verdampfungstemperatur oder Zerfallstemperatur gewählt wird.

Europäisches
Patentamt

EUROPÄISCHER
RECHERCHENBERICHT

Nummer der Anmeldung

EP 90 11 2444

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 221 276  (TOYOTA)<br>* Patentansprüche; Beispiele * | 1-4 | B 23 K 35/28<br>B 23 K 35/02<br>B 23 K 26/00 |
| Y | US-A-3 895 941  (G.F. BOLLING)<br>* Spalten 3-4; Patentansprüche * | 1-4 | |
| A | US-A-4 401 726  (D.S. GNANAMUTHU) | | |
| A | US-A-3 876 447  (F.T. LALLY) | | |
| A | CHEMICAL ABSTRACTS, Band 110, Nr. 12, Juni 1989,<br>Seite 309, Zusammenfassung Nr. 217625g, Columbus, Ohio,<br>US;<br>& JP-A-63 235 087 (TOYOTA CENTRAL RESEARCH AND<br>DEVELOPMENT LABORATORIES, INC.) 30-09-1988 | 1-15 | |

RECHERCHIERTE
SACHGEBIETE (Int. Cl.5)

B 23 K

Der vorliegende Recherchenbericht wurde für alle Patentansprüche erstellt

| Recherchenort | Abschlußdatum der Recherche | Prüfer |
|---|---|---|
| Den Haag | 25 Oktober 90 | MOLLET G.H.J. |